# DEMANDE DE BREVET EUROPEEN

(11) **EP 4 844 523 A1**
(43) Date de publication de la demande: **25.11.2026**
(21) Numéro de dépôt: 26177315.4
(22) Date de dépôt: 07.05.2026
(51) Int. Cl.: G05D 23/19, F24D 19/10, G05B 11/42, G05B 13/02, F24H 15/254, F24H 15/414

(54) **PROCEDE DE REGULATION PID D'UNE PIECE D'UN BATIMENT CHAUFFEE PAR UN FLUIDE CALOPORTEUR CIRCULANT DANS UNE INSTALLATION DE CHAUFFAGE, DISPOSITIF DE REGULATION ET PROGRAMME D'ORDINATEUR**

(30) Priorité: 22.05.2025 FR 2505523
(71) Demandeur: Delta Dore, 35270 Bonnemain (FR)
(72) Inventeur: LEGUILLON, Maxime, 35270 BONNEMAIN (FR); THIROUARD, Benoist, 35270 BONNEMAIN (FR)
(74) Mandataire: Cabinet Le Guen Maillet

(57) **Abrégé**

Il est proposé ici un procédé de régulation PID d'une pièce d'un bâtiment chauffée au moyen d'un fluide caloporteur d'une installation de chauffage. Le procédé comprend : sur réception d'une consigne (E101) de température à atteindre et maintenir, obtenir (E105), en fonction d'un temps de montée par degré Celsius déterminé lors d'un précédent changement de consigne, une valeur prédéterminée pour chacun des paramètres d'un couple de paramètres de la régulation PID, ladite valeur prédéterminée étant une valeur initiale prédéterminée ou une valeur obtenue à partir d'une table de correspondance associant à plusieurs plages de temps de montée par degré Celsius un couple spécifique de paramètres PID, et, effectuer pour un changement de consigne en cours ladite régulation PID en appliquant les valeurs obtenues au couple de paramètres de régulation PID et déterminer (E105) un nouveau temps de montée par degré Celsius.

## Description

### DOMAINE TECHNIQUE

La présente divulgation concerne le domaine des installations de chauffage à fluide caloporteur. Elle concerne plus particulièrement les installations de chauffage utilisant des vannes thermostatiques comprenant une tête thermostatique électronique, connectée ou non, pour la régulation de la température d'une pièce (ou zone intérieure) d'un bâtiment.

### ETAT DE LA TECHNIQUE ANTERIEURE

Une vanne thermostatique (ci-après « vanne ») est une vanne qui permet de contrôler le débit de fluide dans un radiateur. Classiquement les vannes thermostatiques comportent une sonde thermosensible, qui se dilate et se contracte en fonction de la température ambiante et qui actionne un système mécanique, lequel laisse passer une quantité appropriée de fluide caloporteur dans le radiateur. En général, une vanne thermostatique est constituée d'un corps de vanne et d'une tête thermostatique.

Le corps de vanne est un composant de la vanne utilisé pour contrôler la direction, la pression et le débit du fluide caloporteur dans le radiateur. Le corps de vanne constitue la partie principale de la vanne et abrite les mécanismes internes qui permettent l'ouverture, la fermeture ou la modulation du passage du fluide caloporteur dans le radiateur.

La tête thermostatique permet de régler une température souhaitée dans une pièce (ou zone intérieure) d'un bâtiment en déplaçant un élément mobile compris dans le corps de vanne qui module la quantité de fluide circulant dans le radiateur.

Il existe trois types de têtes thermostatiques, les têtes thermostatiques mécaniques, les têtes thermostatiques électroniques et les têtes thermostatiques connectées.

Les têtes thermostatiques mécaniques sont les têtes thermostatiques les plus classiques, avec une graduation visible allant de 1 à 5 et d'un mode hors gel, elles ne sont pas programmables. Elles sont réglables manuellement, uniquement.

Les têtes thermostatiques électroniques se contrôlent facilement, et ont les mêmes avantages que les mécaniques, mais bénéficient d'un affichage et d'un contrôle digital au demi-degré près. Les têtes thermostatiques électroniques sont programmables, qu'il s'agisse de programmes horaires ou hebdomadaires. Elles se contrôlent directement sur la vanne ou *via* un thermostat d'ambiance.

Les têtes thermostatiques connectées sont une évolution des têtes thermostatiques électroniques, offrant une connectivité Internet qui permet une gestion à distance et une intégration avec des systèmes de domotique et/ou des thermostats connectés. Elles permettent une programmation avancée *via* des applications mobiles ou des interfaces web, un contrôle précis de la température, et une collecte de données pour optimiser la consommation énergétique.

En général, les têtes thermostatiques électroniques, connectées ou non, sont configurées pour mettre en œuvre des algorithmes de régulation de la température, tel qu'un algorithme de régulation de type PID (Proportionnelle - Intégrale - Dérivée). Ainsi, par la suite, le terme « régulation PID » ou « régulation thermique » fait référence à l'ensemble des calculs et décisions permettant d'assurer une stabilité thermique d'une pièce (ou zone intérieure) d'un bâtiment tout en minimisant les oscillations et la consommation énergétique. La régulation PID mise en œuvre par la tête thermostatique électronique, connectée ou non, de la vanne permet de moduler l'ouverture du corps de vanne et d'ajuster le débit du fluide caloporteur circulant dans le radiateur. L'objectif de la régulation PID est donc de maintenir la température ambiante au plus proche de la consigne fixée par l'utilisateur, en tenant compte des variations thermiques de l'environnement.

Pour cela, la régulation PID doit tenir compte de plusieurs contraintes, notamment la fréquence et l'amplitude de commande du moteur qui ajuste l'ouverture et la fermeture du corps de vanne en réponse aux instructions de la tête thermostatique, afin de préserver la durée de vie des batteries. Elle doit également considérer la loi d'eau, ainsi que les variations de température extérieure et les apports d'énergie externes et doit pouvoir s'adapter aux différents types de radiateurs. Enfin, pour garantir un bon équilibre entre performance et consommation énergétique, elle doit respecter certaines normes telle que la norme eu.bac *(« European Building Automation and Controls Association »* en anglais), qui évalue l'efficacité et la précision des systèmes de régulation thermique.

Cependant, il existe sur le marché de nombreux corps de vannes aux caractéristiques techniques largement différentes. En effet, la linéarité des corps de vannes varie selon les marques et les modèles. Ainsi, pour une même consigne de température et une même action du moteur de la tête thermostatique, les débits obtenus peuvent être très différents, ce qui peut entraîner des instabilités dans la régulation. Ainsi, malgré les avancées technologiques, la performance des vannes thermostatiques reste donc fortement influencée par les caractéristiques du corps de vanne, rendant l'optimisation de la régulation PID particulièrement complexe. En particulier, la régulation actuelle ne parvient pas à s'adapter de manière optimale à tous les types de corps de vannes, tout en respectant les contraintes précitées. Les écarts de débit générés pour une même consigne de température peuvent provoquer des instabilités et une surconsommation d'énergie, avec des oscillations de température pouvant atteindre 2 à 3 °C.

Il est donc souhaitable de pallier ces inconvénients de l'état de la technique.

En particulier, il est souhaitable de fournir une solution qui permette à la régulation thermique, notamment de type PID, de s'ajuster précisément aux caractéristiques de chaque corps de vanne, ainsi qu'aux variations des conditions environnementales. En outre, il est souhaitable de fournir une solution permettant de garantir une meilleure stabilité de la température, un confort accru, une consommation énergétique réduite et une durée de vie prolongée des batteries des moteurs compris dans la tête thermostatique de la vanne.

### EXPOSE DE L'INVENTION

Il est proposé ici un procédé de régulation proportionnelle, intégrale, dérivée, dite régulation PID, de la température d'une pièce d'un bâtiment, ladite pièce étant chauffée au moyen d'un fluide caloporteur circulant dans une installation de chauffage, ladite installation de chauffage comprenant une tête thermostatique. Le procédé est implémenté dans un dispositif de régulation de la tête thermostatique. Le procédé utilise une table de correspondance comprenant une pluralité de plages de temps de montée par degré Celsius chacune associée à un couple de valeurs d'un couple de paramètres de la régulation PID et le procédé comprend :
- sur réception d'une consigne de température à atteindre et maintenir, obtenir, une valeur prédéterminée pour chacun des paramètres dudit couple de paramètres de la régulation PID, ledit couple comprenant une bande proportionnelle (BP) et un temps d'intégration (Ti), où, pour un premier changement de consigne, ladite valeur prédéterminée est une valeur initiale prédéterminée, et où, pour tout changement de consigne subséquent, ladite valeur prédéterminée est obtenue à partir de la table de correspondance en fonction d'un temps de montée par degré Celsius déterminé lors d'un précédent changement de consigne, et,
- effectuer, en réponse audit changement de consigne, ladite régulation PID en appliquant les valeurs obtenues au couple de paramètres de régulation PID,
- déterminer un nouveau temps de montée par degré Celsius pour ledit changement de consigne en cours.

Avantageusement, en adaptant, à chaque changement de consigne, des paramètres de régulation tels que la bande proportionnelle (BP) et le temps d'intégration (Ti), en fonction d'un temps de montée par degré calculé au changement de consigne précédent, il est possible d'améliorer la performance de la régulation PID. En particulier, cette adaptation rend possible une réponse plus rapide ou plus progressive en fonction de l'écart de température à corriger, ce qui contribue à limiter les phénomènes de dépassement de consigne (i.e., *« overshoot »)* et à améliorer la stabilité autour de la température cible. Il est également possible de réduire les oscillations et les cycles de régulation inutiles.

Il en résulte une amélioration du confort thermique, une réduction de la consommation énergétique, ainsi qu'une sollicitation moindre des équipements de chauffage, augmentant ainsi leur durée de vie.

Selon un mode de réalisation, obtenir une valeur pour chaque paramètre de régulation PID dudit couple, comprend :
- sélectionner une plage prédéterminée de temps de montée par degré Celsius parmi un ensemble de plages prédéterminées de temps de montée par degré Celsius, en fonction du temps de montée par degré Celsius déterminé lors du précédent changement de consigne,
- et lorsqu'une valeur précédente d'un premier paramètre dudit couple est inférieure ou égale à une première valeur seuil prédéterminée, sélectionner, dans ladite table de correspondance, un couple de paramètres de régulation PID associé à ladite plage prédéterminée sélectionnée, sinon ajuster ladite valeur précédente dudit premier paramètre à l'aide d'un coefficient prédéterminé, un deuxième paramètre dudit couple étant à une deuxième valeur seuil prédéterminée.

Selon un mode de réalisation, le procédé comprend : sélectionner un couple de paramètres de régulation PID associé à une plage prédéterminée de temps de montée par degré Celsius inférieure à une plage prédéterminée de temps de montée par degré Celsius à laquelle appartient un couple de paramètres de régulation PID sélectionné au changement de consigne précédent, lorsque le temps de montée par degré Celsius est inférieure à un seuil prédéterminé de temps de monté par degré et qu'en outre ladite valeur précédente dudit premier paramètre est inférieure ou égale au seuil prédéterminé.

Selon un mode de réalisation, ladite comparaison comprend :
- déterminer si une différence entre la température de la nouvelle consigne et la température ambiante initiale est supérieure ou égale à un seuil prédéterminé de température seuil ou si une différence entre la température de la nouvelle consigne et la température ambiante initiale est inférieure audit seuil prédéterminé de température et qu'en outre la vanne est en mode fermé ;
- sinon, déterminer si une différence entre la température ambiante initiale et la température de la nouvelle consigne est supérieure audit seuil prédéterminé de température ou si une différence entre la température ambiante initiale et la température de la nouvelle consigne est inférieure audit seuil prédéterminé de température et qu'en outre la vanne est en mode fermé.

Selon un mode de réalisation, déterminer le nouveau temps de montée par degré Celsius comprend : déterminer le nouveau temps de montée par degré Celsius lorsqu'une différence entre une première température ambiante à un premier instant donné et la température de la consigne initiale est supérieure ou égale à une température seuil prédéterminée et qu'en outre la première température ambiante audit premier instant donné est inférieure à la température de la nouvelle consigne diminuée d'un seuil prédéterminé de température.

Selon un mode de réalisation, le procédé comprend en outre :
- déterminer une température d'un premier pic de température lorsque la différence entre la température de la nouvelle consigne et la température ambiante initiale est supérieure ou égale audit seuil prédéterminé de température ou lorsque la différence entre la température de la nouvelle consigne et la température ambiante initiale est inférieure audit seuil prédéterminé de température et qu'en outre la vanne est en mode fermé,
- déterminer si en outre la température du premier pic de température est supérieure à un seuil prédéterminé de dépassement de température.

Selon un mode de réalisation le procédé comprend en outre : ajuster ladite valeur précédente dudit premier paramètre à l'aide du coefficient prédéterminé, le deuxième paramètre dudit couple étant à la deuxième valeur seuil prédéterminée, lorsque la température du premier pic de température est supérieure au seuil prédéterminé de dépassement de température, et qu'en outre le temps de montée par degré Celsius est inférieur au seuil prédéterminé de temps de montée par degré et la valeur précédente dudit premier paramètre est supérieure au seuil prédéterminé.

Il est également proposé ici, un dispositif de régulation proportionnelle, intégrale, dérivée, dite régulation PID, de la température d'une pièce d'un bâtiment, ladite pièce étant chauffée au moyen d'un fluide caloporteur circulant dans une installation de chauffage, ladite installation de chauffage comprenant une tête thermostatique. Le dispositif de régulation est compris dans la tête thermostatique et comprend de la circuiterie électronique configurée pour utiliser une table de correspondance comprenant une pluralité de plages de temps de montée par degré Celsius chacune associée à un couple de valeurs d'un couple de paramètres de la régulation PID et pour:
- sur réception d'une consigne de température à atteindre et maintenir, obtenir, une valeur prédéterminée pour chacun des paramètres dudit couple de paramètres de la régulation PID, ledit couple comprenant une bande proportionnelle (BP) et un temps d'intégration (Ti), où, pour un premier changement de consigne, ladite valeur prédéterminée est une valeur initiale prédéterminée, et où, pour tout changement de consigne subséquent, ladite valeur prédéterminée est obtenue (E105) à partir de la table de correspondance en fonction d'un temps de montée par degré Celsius déterminé lors d'un précédent changement de consigne, et,
- effectuer, en réponse audit changement de consigne, ladite régulation PID en appliquant les valeurs obtenues au couple de paramètres de régulation PID,
- déterminer un nouveau temps de montée par degré Celsius pour ledit changement de consigne en cours.

Il est aussi proposé un produit programme d'ordinateur, comportant des instructions entraînant l'exécution, par un processeur, du procédé évoqué ci-dessus selon l'un quelconque de ses modes de réalisation, lorsque lesdites instructions sont lues et exécutées par le processeur.

Il est aussi proposé un support de stockage, stockant de telles instructions entraînant l'exécution, par le processeur, du procédé évoqué ci-dessus selon l'un quelconque de ses modes de réalisation, lorsque lesdites instructions sont lues depuis le support de stockage et exécutées par le processeur.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement des étapes du procédé de régulation PID de la température d'une pièce d'un bâtiment chauffée au moyen d'un fluide caloporteur circulant dans une installation de chauffage, selon un mode de réalisation particulier ;
[Fig. 2] illustre schématiquement les sous-étapes d'une étape de comparaison d'une température initiale à une température d'une nouvelle consigne et d'initialisation des paramètres de configuration de la régulation du procédé de régulation thermique, selon un mode de réalisation ;
[Fig. 3A] illustre schématiquement les sous-étapes de l'étape de détermination du temps de montée par degré Celsius ou du temps de descente par degré Celsius du procédé de régulation thermique, selon un mode de réalisation ;
[Fig. 3B] illustre schématiquement les sous-étapes de l'étape de détermination du temps de montée par degré Celsius ou du temps de descente par degré Celsius du procédé de régulation thermique, selon un autre mode de réalisation ;
[Fig. 4] illustre schématiquement les sous-étapes d'une étape de détermination d'un premier pic de température atteint au cours de la régulation vers une nouvelle consigne du procédé de régulation thermique, selon un mode de réalisation ;
[Fig. 5] illustre schématiquement un exemple de plateforme matérielle permettant d'implémenter, sous forme de circuiterie électronique, le dispositif de régulation selon un mode de réalisation.

### EXPOSE DETAILLE DE MODES DE REALISATION

Comme décrit précédemment, une régulation de type PID (Proportionnel-Intégral-Dérivé) est une méthode de contrôle qui ajuste un système (e.g., installation de chauffage) en fonction de l'erreur entre une consigne (e.g., température requise par un utilisateur) et la valeur mesurée (e.g., température mesurée d'une pièce (ou zone intérieure) d'un bâtiment).

Dans la régulation de type PID, la bande proportionnelle (notée BP) est l'un des paramètres de la variable proportionnelle (%P). La BP définit la plage de variation de la température autour du point de consigne dans laquelle la vanne ajuste proportionnellement son ouverture. En d'autres termes, c'est la différence de température qui entraîne une réponse complète (de 0% à 100%) de la vanne. Le temps d'intégration (noté Ti) est un paramètre de la régulation thermique qui détermine la rapidité avec laquelle la vanne réagit aux écarts de température accumulés au fil du temps. Un Ti plus court signifie que la vanne réagira plus rapidement aux écarts, tandis qu'un Ti plus long signifie une réaction plus lente et progressive.

Ces paramètres permettent d'assurer une régulation précise et efficace de la température *via* la tête thermostatique de la vanne. Une configuration optimale de la BP et du Ti permet d'obtenir une réactivité de la régulation et une stabilité thermique adaptées à différentes conditions d'utilisation.

Toutefois, un couple fixe de paramètres BP (bande proportionnelle) et Ti (temps d'intégration) ne convient pas à tous les types de corps de vanne, ni à toutes les conditions environnementales (e.g., conditions de température extérieure, inertie thermique du bâtiment...).

Ainsi, le principe général de la présente divulgation concerne l'adaptation d'un couple de paramètres de la régulation thermique PID, tel que le couple BP (bande proportionnelle) et Ti (temps intégral), en fonction de critères spécifiques, déterminés en temps réel lors d'un changement de consigne. Ces critères sont : l'écart entre une température ambiante initiale (i.e., au moment d'un changement de consigne) et la température de la nouvelle consigne, l'état de la vanne, le temps de montée par degré Celsius, et la valeur maximale de la température lors du premier pic de température *(« overshoot »* en anglais).

Par la suite, le terme « consigne » désigne une valeur de température (en °C) de référence définie, par exemple, par l'utilisateur et qui indique à la vanne thermostatique le niveau de température souhaité ou le mode de fonctionnement (mode « économique » ou mode « confort ») à atteindre et à maintenir. Une consigne peut donc se rapporter à une température spécifique, par exemple 21°C, que la vanne thermostatique doit viser pour assurer le confort de l'utilisateur. Elle peut également correspondre à un mode de fonctionnement, tel que « confort » ou « économique », chacun étant associé à des paramètres de température et/ou des horaires prédéfinis.

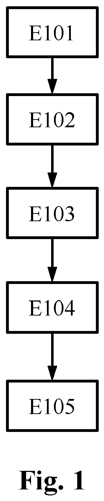

La **Fig. 1** illustre schématiquement des étapes du procédé de régulation PID de la température d'une pièce d'un bâtiment chauffée au moyen d'un fluide caloporteur circulant dans une installation de chauffage selon un mode de réalisation particulier.

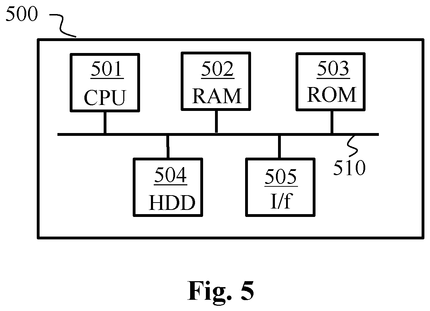

Tout ou partie des étapes du procédé de régulation sont mises en œuvre (i.e., implémentées) dans un dispositif de régulation 500 décrit ci-après en lien avec la **Fig. 5****.** Le dispositif de régulation 500 est incorporé dans une tête thermostatique d'une vanne thermostatique de l'installation de chauffage (e.g., radiateur).

Au cours d'une étape E101, une demande de changement de consigne est réceptionnée par le dispositif de régulation 500. Cette « demande de changement de consigne » correspond donc à un signal ou une commande envoyée au dispositif de régulation 500 par un système de contrôle de la température (e.g., thermostat connecté, système de domotique, ou système de réglage de la température intégré à la vanne thermostatique ...) pour modifier la consigne initiale et donc la température visée ou le mode de fonctionnement de la vanne thermostatique. Cette commande peut être initiée par un utilisateur *via* une interface dédiée du système de contrôle de la température ou automatiquement, par exemple, selon un programme préétabli, comme un planning horaire ou des conditions environnementales particulières. Elle spécifie les nouveaux paramètres souhaités, tels qu'une température plus élevée ou plus basse ou un changement de mode (e.g., passer de « économique » à « confort »), afin d'adapter le fonctionnement de la vanne thermostatique aux besoins actuels de confort ou d'efficacité énergétique.

Selon un mode de réalisation particulier, cette demande de changement de consigne comprend une information concernant une nouvelle consigne à respecter (e.g., nouvelle température à atteindre ou mode de fonctionnement à mettre en œuvre et maintenir).

Par la suite, une « consigne antérieure » ou « consigne initiale » correspond à la température visée avant qu'une demande de changement de consigne ne soit réceptionnée. Autrement dit, il s'agit de la température que le dispositif de régulation 500 maintient stable jusqu'à ce qu'une nouvelle instruction soit donnée, que ce soit par une action manuelle de l'utilisateur ou par un programme préétabli. Le terme « consigne courante », ou « nouvelle consigne », désigne la température cible ou le mode de fonctionnement souhaité qui est spécifié dans la demande de changement de consigne. C'est la valeur ou le paramètre de température à atteindre et maintenir après que le dispositif de régulation 500 ait traité la demande de changement de consigne.

Sur réception de cette demande de changement de consigne, au cours d'une étape E102, le dispositif de régulation 500 configure ou définit les paramètres suivants :
- température initiale, notée Tinit. Au changement de consigne, la température initiale correspond à la température ambiante (T_amb) de la pièce du bâtiment obtenue par le dispositif de régulation 500 (Tinit = T_amb). Pour cela, le dispositif de régulation 500 obtient cette température initiale (i.e., température ambiante au moment du changement de consigne) de capteurs configurés pour mesurer la température ambiante de la pièce du bâtiment. Par la suite, il est entendu par température initiale Tinit, la température ambiante au moment du changement de consigne ;
- moment de changement de consigne, noté tps_chg_cons, correspondant au moment où la consigne est changée, généralement après traitement de la demande de changement de consigne.

Ces paramètres sont nécessaires pour pouvoir effectuer le calcul du temps de montée par degré Celsius (ci-après « temps de montée » ou « temps de montée par degré) ou du temps de descente par degré Celsius (ci-après « temps de descente » ou « temps de descente par degré). Le temps de descente par degré est le temps nécessaire pour que la température ambiante diminue d'au moins un degré Celsius (1 °C) sous l'effet d'une consigne plus basse ou d'un refroidissement, dans des conditions données. Le temps de montée par degré est le temps nécessaire pour que la température ambiante augmente d'au moins un degré Celsius (1 °C) à partir d'un changement de consigne (i.e., augmentation de la température visée par la régulation) ou d'un apport thermique, dans des conditions données. Par la suite, le temps de montée par degré, noté tps_m_°C, est calculé à partir de l'équation suivante : $tps _ m _ ° C = \left(tps_{t}_{1}-tps_chg_cons\right) / \left(T_amb-Tinit\right)$ avec :
- tps_t₁ correspondant à l'instant où la température ambiante T_amb mesurée atteint une valeur égale ou supérieure à la nouvelle consigne diminuée d'un premier seuil (S1) prédéterminé de température (e.g., 0.5°C) ;
- tps_chg_cons correspondant à l'instant de changement de consigne ;
- T_amb correspondant à la température ambiante mesurée au moment tps_t₁, c'est-à-dire une valeur de température égale ou supérieure à la nouvelle consigne diminuée du premier seuil (S1) prédéterminé de température ;
- Tinit correspondant à la température ambiante mesurée au moment du changement de consigne.

Le temps de montée par degré est un indicateur clé de la performance d'un système de régulation thermique. Un temps de montée par degré court indique que le système est réactif et capable de s'adapter rapidement aux changements, tandis qu'un temps de montée par degré long peut indiquer des problèmes de réactivité ou d'efficacité de la régulation thermique.

Selon un mode de réalisation particulier, au cours de cette étape E102, le dispositif de régulation 500 compare, en outre, la température ambiante au moment du changement de consigne (i.e., Tinit) à la température de la nouvelle consigne, et initialise, ou configure, des paramètres de configuration de la régulation en fonction de cette comparaison.

Les paramètres de configuration de la régulation configurés par le dispositif de régulation 500 sont les suivants :
- calcul du temps de montée par degré, noté tps_m_°C_auto, correspondant à une autorisation d'effectuer un calcul du temps de montée par degré (tps_m_°C_auto = 1) ou de l'interdire (tps_m_°C_auto = 0) ;
- calcul du temps de descente par degré, noté tps_d_°C_auto, correspondant à une autorisation d'effectuer un calcul du temps de descente par degré (tps_d_°C_auto = 1) ou de l'interdire (tps_d_°C_auto = 0) ;
- détection du premier pic de température, noté f_max_auto, correspondant à une autorisation de détecter le premier pic de température (f_max_auto = 1) ou de l'interdire (f_max_auto = 0). Ce premier pic ou premier dépassement *(« overshoot »* en anglais) correspond à la valeur maximale atteinte par la température ambiante de la pièce du bâtiment au-dessus de la consigne, après une variation (e.g.., un changement de consigne). C'est donc l'écart temporaire entre la consigne demandée et le pic de température maximal de la réponse ;
- paramètre d'état de la vanne thermostatique, noté s_v, indiquant que la vanne est en mode ouvert (s_v = 1) ou en mode fermé (s_v = 0). La vanne est dite « en mode ouvert » ou « ouverte » lorsqu'elle est en régulation avec un débit de fluide non nul, c'est-à-dire lorsque la tête thermostatique de la vanne doit effectuer une régulation de la température de l'installation de chauffage. La vanne est dite « en mode fermé » ou « fermée » lorsqu'elle ne régule pas et que le débit de fluide est nul.

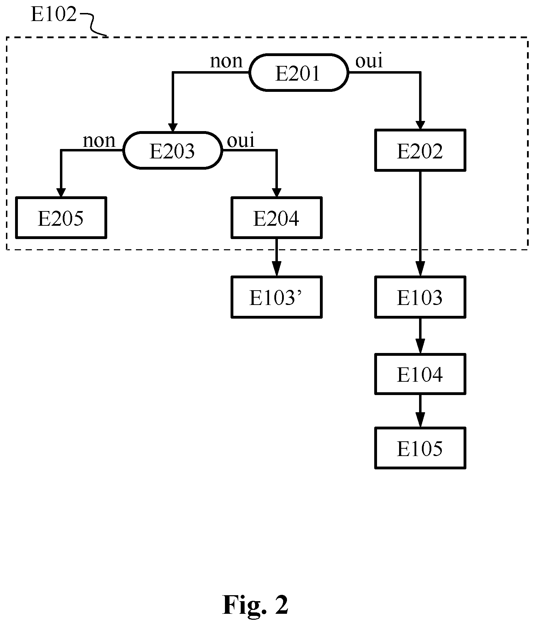

La **Fig. 2** illustre schématiquement les sous-étapes d'une étape de comparaison (E102) d'une température initiale à une température d'une nouvelle consigne et d'initialisation des paramètres de configuration de la régulation au cours du procédé de régulation thermique, selon un mode de réalisation particulier.

Au cours d'une sous-étape E201, le dispositif de régulation 500 détermine si la différence entre la température de la nouvelle consigne et la température initiale Tinit est supérieure ou égale à un deuxième seuil prédéterminé de température S2, par exemple 1°C (quel que soit l'état de la vanne) ou si la différence entre la température de la nouvelle consigne et la température initiale Tinit est inférieure à ce deuxième seuil prédéterminé de température S2, par exemple 1°C avec la vanne en mode fermé (s_v = 0).

Si c'est le cas, (réponse « oui » à l'issue de la sous-étape E201), le dispositif de régulation 500 exécute la sous-étape E202, la sous-étape E203 sinon (réponse « non » à l'issue de la sous-étape E201).

Lorsque le changement de consigne concerne une augmentation de la température visée par la régulation, au cours de la sous-étape E202, le dispositif de régulation 500 définit les paramètres de configuration de la régulation ainsi :
- tps_m_°C_auto = 1, calcul du temps de montée par degré autorisé ;
- tps_d_°C_auto = 0, calcul du temps de descente par degré interdit ;
- f_max_auto = 1, autorisation de détecter le premier pic de température ;
- s_v = 1, le dispositif de régulation 500 commande l'ouverture de la vanne si cette dernière est en mode fermé et indique que la vanne est en mode ouvert.

Au cours de la sous-étape E203, le dispositif de régulation 500 détermine si la différence entre la température initiale Tinit et la température de la nouvelle consigne est supérieure au deuxième seuil prédéterminé de température S2, par exemple 1°C ou si la différence entre la température initiale Tinit est inférieure à ce deuxième seuil prédéterminé de température S2, par exemple 1°C avec la vanne en mode fermé.

Si c'est le cas (réponse « oui » à l'issue de la sous-étape E203), le dispositif de régulation 500 exécute la sous-étape E204, la sous-étape E205 sinon (réponse « non » à l'issue de la sous-étape E203).

Lorsque le changement de consigne concerne une diminution de la température visée par la régulation, au cours de la sous-étape E204, le dispositif de régulation 500 définit les paramètres de configuration de la régulation ainsi :
- tps_m_°C_auto = 0, calcul du temps de montée par degré interdit ;
- tps_d_°C_auto = 1, calcul du temps de descente par degré autorisé ;
- f_max_auto = 0, interdiction de détecter le premier pic de température ;
- s_v = 0, le dispositif de régulation 500 commande la fermeture de la vanne si cette dernière est en mode ouvert et indique que la vanne est en mode fermé.

Au cours de la sous-étape E205, lorsque que la différence entre la température de la nouvelle consigne et la température initiale Tinit est inférieure au deuxième seuil prédéterminé de température S2, par exemple 1°C, et que la vanne est en mode ouvert ou que la différence entre la température initiale Tinit et la température de la nouvelle consigne est inférieure au deuxième seuil prédéterminé de température S2, par exemple 1°C, et que la vanne est en mode ouvert, le dispositif de régulation 500 définit les paramètres de configuration de la régulation ainsi :
- tps_m_°C_auto = 0, calcul du temps de montée par degré interdit ;
- tps_d_°C_auto = 0, calcul du temps de descente par degré interdit ;
- f_max_auto = 0, interdiction de détecter le premier pic de température ;
- s_v = inchangé. Autrement dit, si la vanne est en mode ouvert (s_v = 1) elle reste en mode ouvert, si elle est en mode fermé (s_v = 0) elle reste en mode fermé.

Selon un mode de réalisation particulier, à l'issue de la sous-étape E205, une régulation thermique de type PID « classique », connue de l'état de l'art, est mise en œuvre par le dispositif de régulation 500.

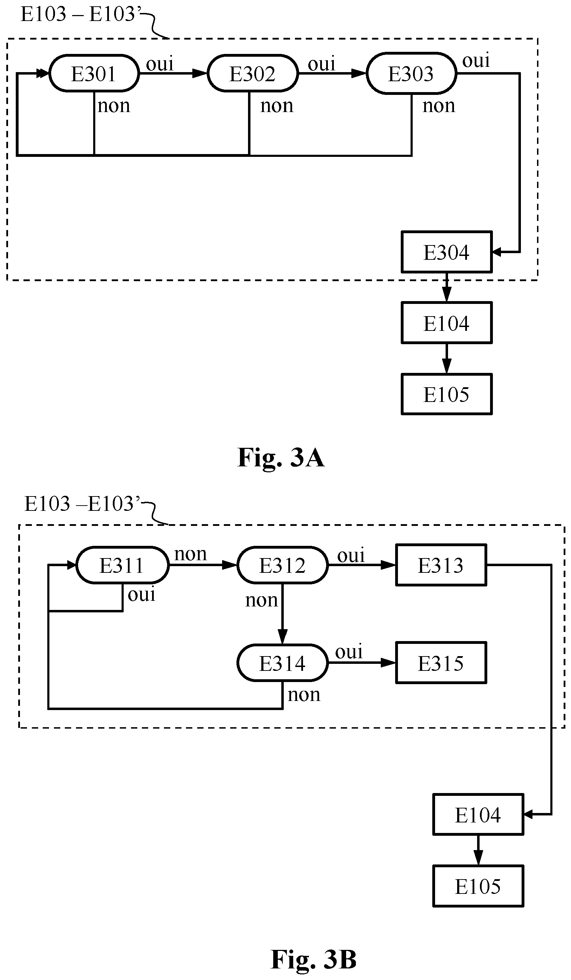

Selon un autre mode de réalisation particulier, à l'issue de la sous-étape E204, le dispositif de régulation 500 met en œuvre la régulation thermique vers la nouvelle consigne en exécutant une étape E103' de détermination du temps de descente par degré Celsius détaillée ci-après en lien avec les **Fig. 3A** et/ou **Fig. 3B****.**

Selon un autre mode de réalisation particulier, à l'issue de la sous-étape E202, le dispositif de régulation 500 met en œuvre une régulation thermique vers la nouvelle consigne en exécutant une étape E103 de détermination d'un temps de montée par degré Celsius détaillée ci-après en lien avec les **Fig. 3A** et/ou **Fig. 3B****.**

La **Fig 3A****.** illustre schématiquement les sous-étapes de l'étape de détermination du temps de montée par degré (E103) ou du temps de descente par degré (E103') du procédé de régulation, selon un premier mode de réalisation particulier.

Dans ce mode de réalisation particulier, le temps de montée par degré ou le temps de descente par degré est calculé au cours de la régulation, lorsque ce calcul est autorisé. Autrement dit, selon ce mode de réalisation, une demande de changement de consigne n'est pas forcément nécessaire pour déclencher le calcul du temps de montée par degré ou du temps de descente par degré. En effet, la détermination du temps de montée par degré (E103) ou du temps de descente par degré (E103') est effectué lorsque le dispositif de régulation 500 autorise le calcul du temps de montée par degré ou du temps de descente par degré. En d'autres termes, le dispositif de régulation 500 a préalablement définit : tps_m_°C_auto = 1 ou tps_d_°C_auto = 1.

Au cours d'une sous-étape E301, le dispositif de régulation 500 vérifie que le calcul du temps de montée par degré ou du temps de descente par degré est autorisé ou interdit. Lorsque le calcul du temps de montée par degré ou du temps de descente par degré est autorisé (réponse « oui » à l'issue de la sous-étape E301), le dispositif de régulation 500 exécute la sous-étape E302, sinon il réitère la sous-étape E301 (réponse « non » à l'issue de la sous-étape E301).

Au cours de la sous-étape E302, le dispositif de régulation 500 vérifie, selon une fréquence prédéterminée, si la température ambiante à l'instant t est supérieure à la température de la nouvelle consigne diminuée du premier seuil prédéterminé de température S1 (e.g., 0.5°C) (i.e., augmentation de la température visée), ou si la température ambiante à l'instant t est inférieure à la température de la nouvelle consigne (i.e., diminution de la température visée). Si c'est le cas (réponse « oui » à l'issue de la sous-étape E302), le dispositif de régulation 500 compare, au cours d'une sous-étape E303, la température ambiante à l'instant t donné et la température initiale (i.e., température ambiante au changement de consigne).

Lorsque la différence entre la température ambiante à l'instant t donné et la température initiale est supérieure à un troisième seuil prédéterminé de température S3 (e.g., 1°C), ou lorsque la différence entre la température initiale et la température ambiante à l'instant t donné est supérieure au troisième seuil prédéterminé de température S3 (e.g., 1°C), le dispositif de régulation 500 détermine au cours d'une sous-étape E304 le temps de montée par degré selon l'équation présentée précédemment, ou le temps de descente par degré.

Sinon (réponse « non » à l'issue de la sous-étape E303), le dispositif de régulation 500 réitère la sous-étape E301 jusqu'à ce que l'une ou l'autre des conditions de température permettent de déterminer soit un temps de montée par degré, soit un temps de descente par degré.

Il est à noter que, lorsqu'un temps de montée par degré ou un temps de descente par degré est calculé à l'issue de la sous-étape E304, les paramètres tps_m_°C_auto ou tps_d_°C_auto passe à 0 (tps_m_°C_auto = 0 ou tps_d_°C_auto = 0).

Alternativement ou additionnellement au premier mode de réalisation ci-dessus, la **Fig. 3B** illustre schématiquement les sous-étapes de l'étape de détermination du temps de montée par degré (E103) ou du temps de descente par degré (E103') du procédé de régulation, selon un deuxième mode de réalisation particulier.

Il est à noter que, selon ce deuxième mode de réalisation, le temps de montée par degré ou le temps de descente par degré, est calculé au changement de consigne.

Au cours d'une sous-étape E311, le dispositif de régulation 500 vérifie, selon une fréquence prédéterminée, si la température ambiante à un instant t donné est égale à la température de la consigne initiale. Si c'est le cas (réponse « oui » à l'issue de la sous-étape E311), le dispositif de régulation 500 réitère la sous-étape E311, sinon il exécute une sous-étape E312 (réponse « non » à l'issue de la sous-étape E311).

Au cours de la sous-étape E312, le dispositif de régulation 500 détermine si une différence entre la température ambiante à l'instant t et la température de la consigne initiale est supérieure à un quatrième seuil prédéterminé de température S4 (e.g., 1°C). Si c'est le cas (réponse « oui » à l'issue de la sous-étape E312), le dispositif de régulation 500 détermine, au cours d'une sous-étape E313, le temps de montée par degré selon l'équation présentée précédemment. Le changement de consigne concerne ici une augmentation de la température visée par la régulation. Sinon, (réponse « non » à l'issue de la sous-étape E312), le dispositif de régulation 500 exécute une sous-étape E314.

Au cours de la sous-étape E314, le dispositif de régulation 500 détermine si une différence entre la température de la consigne initiale et la température ambiante à l'instant t est supérieure au quatrième seuil prédéterminé de température S4 (e.g., 1°C). Si c'est le cas (réponse « oui » à l'issue de la sous-étape E314), le dispositif de régulation 500 détermine, au cours d'une sous-étape E315, le temps de descente par degré. Autrement dit, le changement de consigne concerne une diminution de la température.

Sinon (réponse « non » à l'issue de la sous-étape E314), le dispositif de régulation 500 réitère la sous-étape E311 jusqu'à ce que l'une ou l'autre des conditions de température permettent de déterminer soit un temps de montée par degré, soit un temps de descente par degré.

Lors d'un changement de consigne, il est possible que tps_m_°C_auto = 1 ou tps_m_°C_auto = 0 (ou tps_d_°C_auto = 0 ou tps_d_°C_auto = 1). Si tps_m_°C_auto = 1 ou tps_d_°C_auto = 1 au changement de consigne, alors le dispositif de régulation 500 ne recalcule pas de temps de montée (ou de descente) par degré. Si tps_m_°C_auto = 0 et que la différence entre la température ambiante à l'instant t donné et la température initiale est supérieure au troisième seuil prédéterminé de température S3 (e.g., 1°C), le dispositif de régulation 500 recalcule le temps de montée par degré et cela même si la condition selon laquelle la température ambiante à l'instant t est supérieure à la température de la nouvelle consigne diminuée du premier seuil prédéterminé de température S1 (e.g., 0.5°C) n'est pas respectée. Si tps_d_°C_auto = 0, le dispositif de régulation 500 recalcule le temps de descente par degré.

Selon un mode de réalisation particulier, le dispositif de régulation 500 définit, pour un premier changement de consigne vers une consigne particulière, un premier paramètre BP et un deuxième paramètre Ti de la régulation à des valeurs initiales par défaut tel que par exemple :
- BP = 50°C
- Ti = 60min

Le couple de paramètres BP/Ti dit « initial » (c'est-à-dire définit par les valeurs BP = 50°C et Ti = 60 minutes) est utilisé pour la régulation thermique lorsqu'une nouvelle consigne de température est demandée pour la première fois (i.e., premier changement de consigne). En d'autres termes, lors d'un premier changement de consigne, le dispositif de régulation 500 applique ces paramètres initiaux de BP et Ti pour observer la manière dont la température évolue vers la consigne demandée.

Selon un mode de réalisation particulier, comme par exemple illustré en lien avec l'étape E105, sur un prochain changement de consigne, le dispositif de régulation 500 ajustera automatiquement le couple BP/Ti associé, en se basant sur le temps de montée déterminé lors du précédent changement de consigne. Un nouveau temps de montée par degré est alors déterminé pour le changement de consigne en cours, sur la base d'une régulation thermique dont le couple de paramètres BP/Ti est ajusté tel qu'il va l'être décrit ci-après en lien avec l'étape E105. Selon un mode de réalisation, si le temps de montée par degré atteint une valeur prédéterminée dite « optimale », par exemple 2500 s/°C, au cours d'un prochain changement de consigne, alors le dispositif de régulation 500 enregistre dans une mémoire le couple BP/Ti permettant de réguler la température telle que cette valeur prédéterminée de temps de montée par degré est atteinte. Il est à noter que cette valeur « optimale » peut toutefois varier en fonction des caractéristiques spécifiques de l'installation de chauffage et de son environnement, notamment l'inertie thermique, le volume chauffé, ou encore le type de fluide caloporteur utilisé.

Ce mécanisme d'adaptation du couple BP/Ti permet d'améliorer la régulation thermique à chaque nouvelle sollicitation de cette consigne.

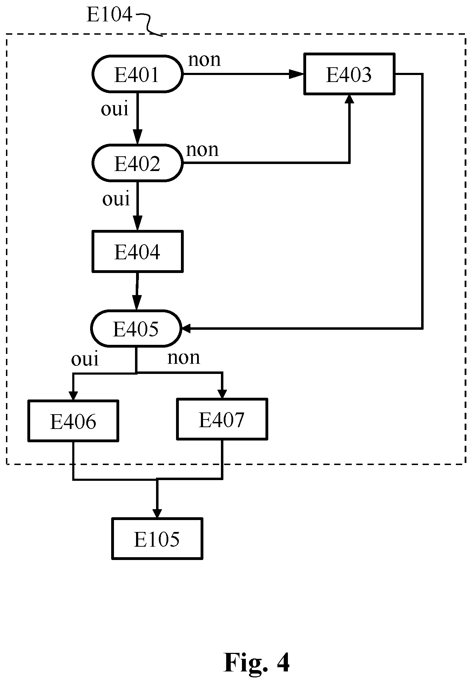

Selon un mode de réalisation particulier, lorsque le changement de consigne concerne une augmentation de la température visée (réponse « oui » à l'issue de la sous-étape E202), parallèlement (i.e., concomitamment) ou séquentiellement à l'étape E103, le dispositif de régulation 500 détermine, au cours d'une étape E104, un premier pic de température ambiante atteint au cours de la régulation pour atteindre la nouvelle consigne. Pour cela, le dispositif de régulation 500 exécute les sous-étapes E401 à E407 de l'étape E104, dont un exemple est illustré en **Fig. 4****.**

La **Fig. 4** illustre schématiquement les sous-étapes d'une étape de détermination (E104) d'un premier pic de température atteint au cours de la régulation vers la nouvelle consigne du procédé de régulation thermique, selon un mode de réalisation particulier.

Lorsque le calcul du premier pic de température est autorisé (f_max_auto = 1), le dispositif de régulation 500 effectue, selon une fréquence prédéterminée, une évaluation de l'évolution de la température ambiante. Pour cela, au cours d'une sous-étape E401, le dispositif de régulation 500 compare la température ambiante à un instant *t* donné à celle à l'instant *t-1* immédiatement précédent. Si la température ambiante diminue entre ces deux instants (réponse « oui » à l'issue de la sous-étape E401), le dispositif de régulation 500 vérifie, au cours d'une sous-étape E402, si la température ambiante à l'instant *t* est supérieure à la température de la nouvelle consigne demandée. Si tel est le cas (réponse « oui » à l'issue de la sous-étape E402), le dispositif de régulation 500 détermine, au cours de la sous-étape E404, que la valeur du premier pic de température correspond à la valeur de la température ambiante à l'instant précédent (i.e., à l'instant *t-1).*

Dans le cas contraire (réponse « non » à l'issue de la sous-étape E401, ou de la sous-étape E402), le dispositif de régulation détermine, au cours de la sous-étape E403, que la valeur du premier pic de température correspond à la valeur de la température ambiante à l'instant *t.*

Le dispositif de régulation 500 compare ensuite, au cours d'une sous-étape E405, la température du premier pic de température à la température de la nouvelle consigne additionnée d'un seuil prédéterminé de dépassement de température S_{D} (e.g., 0.4°C). Lorsque la température du premier pic de température dépasse la température de la nouvelle consigne additionnée du seuil prédéterminé S_{D} de dépassement de température (réponse « oui » à l'issue de la sous-étape E405), le dispositif de régulation 500 définit le paramètre S_f_max à 1 (sous-étape E406), sinon (réponse « non » à l'issue de la sous-étape E405), il définit le paramètre S_f_max à 0 (sous-étape E407).

Ainsi, à l'issue de l'étape E104, le dispositif de régulation a déterminé la valeur de la température du premier pic de température et si le seuil prédéterminé S_{D} de dépassement de température a été atteint (S_f_max = 1) ou non (S_f_max = 0). En effet, un premier pic de température trop élevé est généralement représentatif d'une régulation trop réactive. En effet, plus les paramètres de régulation BP et Ti sont faibles, plus la régulation réagit rapidement, ce qui augmente le risque de dépassement. À l'inverse, des valeurs plus élevées de BP et Ti adoucissent la réponse et limitent les pics de température.

Par la suite, comme illustré par exemple en lien avec l'étape E105, le dépassement de ce seuil prédéterminé S_{D} de dépassement de température par le premier pic de température sera pris en compte pour l'ajustement des paramètres BP/Ti que si, lors du précédent changement de consigne vers cette même valeur de consigne, le temps de montée par degré était inférieur à un seuil prédéterminé de temps de montée par degré (S_{Tps}), par exemple 2000 secondes par degré.

Selon un mode de réalisation particulier, lors d'un changement de consigne, le dispositif de régulation 500 ajuste automatiquement le couple BP/Ti, en se basant sur le temps de montée par degré déterminé lors du précédent changement de consigne. En d'autres termes, un temps de montée par degré a déjà été déterminé pour le précédent changement de consigne.

Pour cela, au cours d'une étape E105, pour le changement de consigne en cours vers la nouvelle consigne, le dispositif de régulation 500 compare le temps de montée par degré déterminé lors du précédent changement de consigne, à différentes plages prédéterminées de temps de montée par degré.

En particulier, le dispositif de régulation 500 compare le temps de montée (tps_m_°C) déterminé lors du précédent changement de consigne à des valeurs prédéterminées de temps de montée par degré. Par exemple, le dispositif de régulation 500 détermine, pour le changement de consigne en cours vers la nouvelle consigne, si le temps de montée par degré (tps_m_°C), déterminé lors du précédent changement de consigne, est :
- $tps _ m _ ° C < 2000 s / ° C$
- $2000 s / ° C < tps _ m _ ° C < 2800 s / ° C ;$
- $2800 s / ° C < tps _ m _ ° C < 3900 s / ° C ;$
- $3900 s / ° C < tps _ m _ ° C < 5300 s / ° C ;$
- $5300 s / ° C < tps _ m _ ° C < 6500 s / ° C ;$
- $tps _ m _ ° C > 6500 s / ° C .$

Il est à noter que ces valeurs de temps de montée par degré sont utilisées ici à titre d'exemple pour illustrer la mise en œuvre du procédé selon l'invention selon un mode de réalisation.

Selon un mode de réalisation, le dispositif de régulation 500 détermine, en outre, si la valeur du paramètre de régulation BP (ou « premier paramètre de régulation ») utilisée au cours du changement de consigne précédent est inférieure ou égale à une valeur seuil prédéterminée, telle que 50°C.

Sur la base d'une valeur de temps de montée par degré déterminée au cours du précédent changement de consigne et d'une valeur de premier paramètre de régulation BP utilisée pour la régulation au cours de ce précédent changement de consigne, le dispositif de régulation 500 interroge une table de correspondance associant des couples de paramètres BP/Ti à différentes plages prédéterminées de temps de montée par degré, afin d'identifier un nouveau couple de paramètres BP/Ti. Cette table, enregistrée dans une mémoire du dispositif de régulation 500, est déterminée de manière empirique, par exemple à partir de données expérimentales ou de simulation.

Plus particulièrement, plus le temps de montée par degré est élevé, plus les valeurs BP et Ti sélectionnées seront faibles, et inversement. Pour améliorer la dynamique de la régulation, le dispositif de régulation 500 parcourt cette table lorsque la valeur du paramètre BP est inférieure ou égale à la valeur seuil prédéterminée de 50°C, par exemple. Lorsque la valeur du paramètre BP est supérieure à la valeur seuil prédéterminée de 50°C, la valeur du paramètre BP déterminée au changement de consigne précédent est ajustée (i.e., augmenter ou diminuer) à l'aide d'un coefficient prédéterminé par exemple un coefficient multiplicateur de1,25, tandis que le paramètre Ti reste constant à 60 minutes, par exemple.

Ainsi, à titre illustratif, si :
- si 2000 s/°C < tps_m_°C < 2800 s/°C et BP ≤ 50°C, le couple de paramètres BP/Ti reste inchangé par rapport au couple BP/Ti du changement de consigne précédent (e.g., BP = 50°C et Ti = 60min s'il s'agit du deuxième changement de consigne), mais si BP > 50°C, alors la valeur du paramètre BP obtenue au changement de consigne précédent est ajustée à l'aide d'un coefficient prédéterminé (e.g., coefficient multiplicateur de 1,25) pour le changement de consigne en cours et Ti = 60min ;
- si 2800 s/°C < tps_m_°C < 3900 s/°C et BP ≤ 50°C, le couple de paramètres BP/Ti sélectionné dans la table est, par exemple, le suivant : BP = 30°C et Ti = 60min, mais si BP > 50°C, alors la valeur du paramètre BP obtenue au changement de consigne précédent est ajustée à l'aide d'un coefficient prédéterminé (e.g., coefficient multiplicateur de 1,25) pour le changement de consigne en cours et Ti = 60min ;
- si 3900 s/°C < tps_m_°C < 5300 s/°C et BP ≤ 50°C, le couple de paramètres BP/Ti sélectionné dans la table est, par exemple, le suivant : BP = 30°C et Ti = 30min, mais si BP > 50°C, alors la valeur du paramètre BP obtenue au changement de consigne précédent est ajustée à l'aide du coefficient prédéterminé (e.g., coefficient multiplicateur de 1,25) pour le changement de consigne en cours et Ti = 60min ;
- si 5300 s/°C < tps_m_°C < 6500 s/°C et BP ≤ 50°C, le couple de paramètres BP/Ti sélectionné dans la table est, par exemple, le suivant : BP = 10°C et Ti = 30min, mais si BP > 50°C, alors la valeur du paramètre BP obtenue au changement de consigne précédent est ajustée à l'aide du coefficient prédéterminé (e.g., coefficient multiplicateur de 1,25) pour le changement de consigne en cours et Ti = 60min ;
- si tps_m_°C < 6500 s/°C et BP ≤ 50°C, le couple de paramètres BP/Ti sélectionné dans la table est, par exemple le suivant : BP = 5°C et Ti = 30min, mais si BP > 50°C, alors la valeur du paramètre BP obtenue au changement de consigne précédent est ajustée à l'aide du coefficient prédéterminé (e.g., coefficient multiplicateur de 1,25) pour le changement de consigne en cours et Ti = 60min.

Ainsi, le dispositif de régulation 500 sélectionne dans la table de correspondance le couple BP/Ti associé à la plage prédéterminée de temps de montée par degré à laquelle appartient le temps de montée par degré déterminé au cours du changement de consigne précédent. À titre d'exemple, à partir d'une valeur initiale de BP égale à 50 °C et de Ti égal à 60 minutes, et en tenant compte à la fois des conditions environnementales et des caractéristiques thermiques du bâtiment, le dispositif de régulation 500 peut appliquer des valeurs réduites de BP et/ou de Ti, jusqu'à l'obtention d'un temps de montée par degré « optimale », par exemple de 2500 s/°C. Il est ainsi possible d'améliorer la réactivité de la régulation et ainsi diminuer le temps de montée par degré pour le changement de consigne en cours.

Par exemple, pour un changement de consigne en cours, le dispositif de régulation 500 vérifie le temps de montée par degré déterminé au cours du changement de consigne précédent. Si celui-ci était de 4500 s/°C, alors le dispositif de régulation 500 sélectionne dans la table de correspondance le couple BP=30°C et Ti=30min. Un nouveau temps de montée par degré est ensuite déterminé pour le changement de consigne en cours, puis enregistré. Pour le changement de consigne suivant, si le nouveau temps de montée par degré atteint la valeur prédéterminée optimale par exemple de 2500 s/°C, alors le dispositif de régulation 500 conserve le couple BP=30°C et Ti=30min, sinon il sélectionne un nouveau couple dans la table de correspondance en fonction de ce nouveau temps de montée par degré.

De manière expérimentale, il a été constaté que les configurations avec des valeurs plus faibles de BP et Ti induisent un nombre de pas moteur plus élevé, ce qui se traduit par une consommation d'énergie accrue. Le procédé propose donc, dans le cas d'un temps de montée inférieur à 2000 secondes par degré Celsius et donc déjà rapide, de rechercher des couples de paramètres BP/Ti ayant des valeurs plus élevées de BP et/ou Ti, permettant de réduire la sollicitation du moteur et ainsi la consommation énergétique. Cela se fait au prix d'une perte de réactivité de la régulation mais permet toutefois de préserver une bonne qualité de régulation.

En effet, il peut ainsi arriver qu'un couple BP/Ti tel que BP = 5°C et Ti = 30 min donne un temps de montée par degré inférieur à 2000 secondes par degré Celsius. Toutefois, ce couple conduit à une sollicitation importante du moteur. Le procédé prévoit alors une remontée dans la table vers des couples BP/Ti plus « lents », en vue d'un meilleur compromis entre performance de la régulation thermique et consommation des piles.

Dans un exemple, lorsque le dispositif de régulation 500 détermine que tps_m_°C < 2000 s/°C et BP ≤ 50°C au changement de consigne précédent (par exemple BP=30°C et Ti=30°C), le dispositif de régulation 500 parcourt la table et sélectionne un couple de paramètres BP/Ti associé à une plage prédéterminée de temps de montée par degré inférieure à la plage de seuil à laquelle appartient le couple BP/Ti déterminé lors du changement de consigne précédent (par exemple la plage seuil à laquelle le couple BP=30°C et Ti=60min est associé). En d'autres termes, lorsque le temps de montée par degré déterminé lors du changement de consigne précédent est inférieur à 2000 secondes par degré Celsius, le dispositif de régulation 500 remonte (i.e., aller d'une plage de seuil à l'autre dans un ordre décroissant de temps de montée par degré), à chaque changement de consigne, la table de correspondance en allant vers des configurations associées à une réponse plus lente de la régulation, jusqu'à obtenir un couple BP/Ti permettant d'avoir, pendant la régulation, un temps de montée par degré approchant la valeur prédéterminée optimale (e.g., 2500 s/°C).

Selon un mode de réalisation, lorsque tps_m_°C < 2000 s/°C et BP > 50°C (e.g., lorsque le temps de montée par degré est inférieur à 2000 s/°C et qu'il y a eu un pic de température lors de la demande de chauffe précédente), le dispositif de régulation 500 vérifie si le premier pic de température additionné du seuil prédéterminé S2 de dépassement de la température (S_F_m) a été atteint au cours du changement de consigne précédent (S_f_max = 1). Si c'est le cas, le dispositif de régulation 500 définit un couple BP/Ti tel que BP est ajusté à l'aide du coefficient prédéterminé, (e.g., coefficient multiplicateur de 1,25) et Ti = 60min.

En l'absence de dépassement significatif de la consigne (S_f_max = 0), les paramètres BP/Ti sont conservés.

Il est à noter que les essais ont démontré qu'une augmentation de BP au-delà de 50°C n'apporte pas de réduction significative supplémentaire sur le nombre de pas moteur.

Toutefois, une telle augmentation peut être envisagée dans le seul but d'atténuer un éventuel pic de température, si celui-ci est détecté.

A l'issue de l'étape E105, le dispositif de régulation 500 effectue la régulation thermique, pour atteindre la nouvelle consigne en appliquant à la régulation un couple BP/Ti sélectionné à partir du temps de montée par degré déterminé au changement de consigne précédent, de la table de correspondance et, le cas échéant, à partir en outre d'une valeur du premier pic de température.

Selon un mode de réalisation particulier, le dispositif de régulation 500 détermine un nouveau temps de montée par degré tel qu'il l'a été décrit précédemment, par exemple en lien avec la **Fig. 3A** ou **Fig. 3B****,** cette fois en mettant en œuvre une régulation qui prend en compte le couple BP/Ti appliqué durant la régulation de la nouvelle consigne. Le nouveau temps de montée par degré ainsi déterminé vient alors remplacer la valeur précédemment stockée, assurant ainsi une mise à jour du temps de montée par degré.

La **Fig. 5** illustre schématiquement un exemple de plateforme matérielle permettant d'implémenter, sous forme de circuiterie électronique, le dispositif de régulation selon un mode de réalisation

La plateforme matérielle comporte, reliés par un bus de communication 510 : un processeur ou CPU (« *Central Processing Unit »* en anglais) 501 ; une mémoire vive RAM *(« Random-Access Memory »* en anglais) 502 ; une mémoire morte 503, par exemple de type ROM *(« Read Only Memory »* en anglais) ou EEPROM *(« Electrically-Erasable Programmable ROM»* en anglais), telle qu'une mémoire Flash ; une unité de stockage, telle qu'un disque dur HDD *(« Hard Disk Drive »* en anglais) 504, ou un lecteur de support de stockage, tel qu'un lecteur de cartes SD *(« Secure Digital »* en anglais) ; et un gestionnaire d'interfaces I/f 505.

Le gestionnaire d'interfaces I/f 505 permet au dispositif de régulation 500 d'interagir avec des capteurs de température intérieure (e.g., sonde thermique) et, le cas échéant, avec des capteurs de température extérieure, mais également avec le moteur de la tête thermostatique de vanne pour commander l'ouverture ou la fermeture de la vanne, et des systèmes de contrôle de température (thermostat connecté, système de domotique, ou système de réglage de la température intégré à la vanne thermostatique, etc.)

Le processeur 501 est capable d'exécuter des instructions qui forment un programme d'ordinateur (produit programme d'ordinateur) et qui sont chargées dans la mémoire vive 502 à partir de la mémoire morte 503, d'une mémoire externe, d'un support de stockage (tel qu'une carte SD), ou d'un réseau de communication ou directement depuis la mémoire morte 503. Lorsque la plateforme matérielle est mise sous tension, le processeur 501 est capable de lire de la mémoire vive 502 les instructions précitées et de les exécuter. Quand elles sont lues (depuis la mémoire vive 502 ou un support de stockage) et exécutées par le processeur 501, ces instructions (qui forment un programme d'ordinateur) entraînent l'exécution, par le processeur 501, de tout ou partie des étapes, procédés et fonctionnements décrits ici.

Tout ou partie des étapes, procédés et fonctionnements décrits ici peut ainsi être implémenté sous forme logicielle par exécution d'un ensemble d'instructions par une machine programmable, par exemple un processeur de type DSP *(« Digital Signal Processor »* en anglais) ou un microcontrôleur, ou être implémenté sous forme matérielle par une machine ou un composant électronique (« *chip »* en anglais) dédié ou un ensemble de composants électroniques *(« chipset »* en anglais) dédié, par exemple un composant FPGA *(« Field Programmable Gate Array »* en anglais) ou ASIC *(« Application Specific Integrated Circuit »* en anglais). D'une manière générale, le dispositif de régulation 500 comporte de la circuiterie électronique adaptée et configurée pour implémenter les fonctionnements, procédés et étapes décrits ici.

## Revendications

1. Procédé de régulation proportionnelle, intégrale, dérivée, dite régulation PID, de la température d'une pièce d'un bâtiment, ladite pièce étant chauffée au moyen d'un fluide caloporteur circulant dans une installation de chauffage, ladite installation de chauffage comprenant une tête thermostatique, **caractérisé en ce que** le procédé est implémenté dans un dispositif de régulation (500) de la tête thermostatique **et en ce qu'**il utilise une table de correspondance comprenant une pluralité de plages de temps de montée par degré Celsius chacune associée à un couple de valeurs d'un couple de paramètres de la régulation PID **et en ce qu'**il comprend :
- sur réception (E101) d'une consigne de température à atteindre et maintenir, obtenir une valeur prédéterminée pour chacun des paramètres dudit couple de paramètres de la régulation PID , ledit couple comprenant une bande proportionnelle (BP) et un temps d'intégration (Ti), où, pour un premier changement de consigne, ladite valeur prédéterminée est une valeur initiale prédéterminée, et où, pour tout changement de consigne subséquent, ladite valeur prédéterminée est obtenue (E105) à partir de la table de correspondance en fonction d'un temps de montée par degré Celsius déterminé lors d'un précédent changement de consigne et,
- effectuer, en réponse audit changement de consigne, ladite régulation PID en appliquant les valeurs obtenues au couple de paramètres de régulation PID (BP, Ti),
- déterminer (E103) un nouveau temps de montée par degré Celsius pour ledit changement de consigne en cours.

2. Procédé selon la revendication 1, **caractérisé en ce qu'**obtenir (E105) une valeur pour chaque paramètre de régulation PID dudit couple (BP, Ti), comprend :
- sélectionner une plage prédéterminée de temps de montée par degré Celsius parmi un ensemble de plages prédéterminées de temps de montée par degré Celsius, en fonction du temps de montée par degré Celsius déterminé lors du précédent changement de consigne,
- et lorsqu'une valeur précédente d'un premier paramètre dudit couple est inférieure ou égale à une première valeur seuil prédéterminée, sélectionner, dans ladite table de correspondance, un couple de paramètres de régulation PID (BP/Ti) associé à ladite plage prédéterminée sélectionnée, sinon ajuster ladite valeur précédente dudit premier paramètre à l'aide d'un coefficient prédéterminé, un deuxième paramètre dudit couple étant à une deuxième valeur seuil prédéterminée.

3. Procédé de régulation selon la revendication 2, **caractérisé en ce qu'**il comprend : sélectionner un couple de paramètres de régulation PID (BP/Ti) associé à une plage prédéterminée de temps de montée par degré Celsius inférieure à une plage prédéterminée de temps de montée par degré Celsius à laquelle appartient un couple de paramètres de régulation PID (BP/Ti) sélectionné au changement de consigne précédent, lorsque le temps de montée par degré Celsius est inférieure à un seuil prédéterminé de temps de monté par degré et qu'en outre ladite valeur précédente dudit premier paramètre est inférieure ou égale au seuil prédéterminé.

4. Procédé selon l'une quelconque des revendications 1 à 3, **caractérisé en ce que** ladite comparaison (E102) comprend :
- déterminer (E201) si une différence entre la température de la nouvelle consigne et la température ambiante initiale est supérieure ou égale à un seuil prédéterminé de température seuil (S2) ou si une différence entre la température de la nouvelle consigne et la température ambiante initiale est inférieure audit seuil prédéterminé de température (S2) et qu'en outre la vanne est en mode fermé ;
- sinon, déterminer (E203) si une différence entre la température ambiante initiale et la température de la nouvelle consigne est supérieure audit seuil prédéterminé de température (S2) ou si une différence entre la température ambiante initiale et la température de la nouvelle consigne est inférieure audit seuil prédéterminé de température (S2) et qu'en outre la vanne est en mode fermé.

5. Procédé selon l'une quelconque des revendications 1 à 4, **caractérisé en ce que** déterminer (E103) le nouveau temps de montée par degré Celsius comprend : déterminer le nouveau temps de montée par degré Celsius lorsqu'une différence entre une première température ambiante à un premier instant donné et la température de la consigne initiale est supérieure ou égale à une température seuil prédéterminée (S4) et qu'en outre la première température ambiante audit premier instant donné est inférieure à la température de la nouvelle consigne diminuée d'un seuil prédéterminé (S1) de température.

6. Procédé selon l'une quelconque des revendications 4 et 5, **caractérisé en ce qu'il** comprend en outre :
- déterminer (E104) une température d'un premier pic de température lorsque la différence entre la température de la nouvelle consigne et la température ambiante initiale est supérieure ou égale audit seuil prédéterminé de température (S2) ou lorsque la différence entre la température de la nouvelle consigne et la température ambiante initiale est inférieure audit seuil prédéterminé de température (S2) et qu'en outre la vanne est en mode fermé,
- déterminer (E104) si en outre la température du premier pic de température est supérieure à un seuil prédéterminé (S_{D}) de dépassement de température.

7. Procédé de régulation selon la revendication 6, **caractérisé en ce qu'**il comprend en outre : ajuster ladite valeur précédente dudit premier paramètre (BP) à l'aide du coefficient prédéterminé, le deuxième paramètre (Ti) dudit couple étant à la deuxième valeur seuil prédéterminée, lorsque la température du premier pic de température est supérieure au seuil prédéterminé (S2) de dépassement de température, et qu'en outre le temps de montée par degré Celsius est inférieur au seuil prédéterminé de temps de monté par degré et la valeur précédente dudit premier paramètre (BP) est supérieure au seuil prédéterminé.

8. Dispositif (500) de régulation proportionnelle, intégrale, dérivée, dite régulation PID, de la température d'une pièce d'un bâtiment, ladite pièce étant chauffée au moyen d'un fluide caloporteur circulant dans une installation de chauffage, ladite installation de chauffage comprenant une tête thermostatique, **caractérisé en ce que** ledit dispositif de régulation (500) est compris dans la tête thermostatique **et en ce qu'**il comprend de la circuiterie électronique configurée pour utiliser une table de correspondance comprenant une pluralité plages de temps de montée par degré Celsius chacune associée à un couple de valeurs d'un couple de paramètres de la régulation PID, et pour :
- sur réception (E101) d'une consigne de température à atteindre et maintenir, obtenir une valeur prédéterminée pour chacun des paramètres dudit couple de paramètres de la régulation PID ledit couple comprenant une bande proportionnelle (BP) et un temps d'intégration (Ti), où, pour un premier changement de consigne, ladite valeur prédéterminée est une valeur initiale prédéterminée, et où, pour tout changement de consigne subséquent, ladite valeur prédéterminée est obtenue (E105) à partir de la table de correspondance en fonction d'un temps de montée par degré Celsius déterminé lors d'un précédent changement de consigne, , et,
- effectuer, en réponse audit changement de consigne,, ladite régulation PID en appliquant les valeurs obtenues au couple de paramètres de régulation PID (BP, Ti),
- déterminer (E103) un nouveau temps de montée par degré Celsius pour ledit changement de consigne en cours.

9. Produit programme d'ordinateur, comportant des instructions entraînant l'exécution, par un processeur (501), du procédé selon la revendication 1 à 8, lorsque lesdites instructions sont exécutées par le processeur.

10. Support de stockage (503), stockant un programme d'ordinateur comportant des instructions entraînant l'exécution, par un processeur (501), du procédé selon la revendication 1 à 8, lorsque lesdites instructions sont lues depuis le support de stockage et exécutées par le processeur.
